(19) Europäisches Patentamt / European Patent Office / Office européen des brevets

(11) **EP 1 637 854 B1**

(12) **FASCICULE DE BREVET EUROPEEN**

(45) Date de publication et mention
de la délivrance du brevet:
**06.08.2014 Bulletin 2014/32**

(51) Int Cl.:
***G01J 5/20*** (2006.01)

(21) Numéro de dépôt: **05300535.1**

(22) Date de dépôt: **30.06.2005**

(54) **Dispositif de détection de rayonnements infrarouges à détecteurs bolométriques**

Bolometrische Detektorvorrichtung für infrarote Strahlung

Bolometric detecting device for infrared radiation

(84) Etats contractants désignés:
**DE FR GB IT SE**

(30) Priorité: **16.09.2004 FR 0409847**

(43) Date de publication de la demande:
**22.03.2006 Bulletin 2006/12**

(73) Titulaire: **ULIS**
**38113 Veurey Voroize (FR)**

(72) Inventeur: **VILAIN, Michel**
**38450, SAINT GEORGES COMMIERS (FR)**

(74) Mandataire: **Vuillermoz, Bruno et al**
**Cabinet Laurent & Charras**
**"Le Contemporain"**
**50, Chemin de la Bruyère**
**69574 Dardilly Cédex (FR)**

(56) Documents cités:
**FR-A- 2 798 994      US-B1- 6 188 069**
**US-B1- 6 583 416**

• **TISSOT J -L ET AL: "LETI/LIR's amorphous silicon uncooled microbolometer development" PROCEEDINGS OF THE SPIE - THE INTERNATIONAL SOCIETY FOR OPTICAL ENGINEERING SPIE-INT. SOC. OPT. ENG USA, vol. 3379, 1998, pages 139-144, XP002329965 ISSN: 0277-786X**

Printed by Jouve, 75001 PARIS (FR)

**Description**

La présente invention concerne un dispositif de détection de rayonnements infrarouges mettant en oeuvre des détecteurs bolométriques. Elle trouve notamment son domaine d'application dans l'imagerie infrarouge.

Dans le domaine des détecteurs infrarouges, il est connu d'utiliser des dispositifs agencés sous forme matricielle, et susceptibles de fonctionner à température ambiante, c'est-à-dire ne nécessitant pas de refroidissement à de très basses températures, contrairement aux dispositifs de détection appelés "détecteurs quantiques" qui eux, nécessitent un fonctionnement à très basse température, typiquement celle de l'azote liquide.

Ces détecteurs non refroidis utilisent traditionnellement la variation d'une grandeur physique d'un matériau approprié, en fonction de la température, au voisinage de 300K. Dans le cas des détecteurs bolométriques, cette grandeur physique est la résistivité électrique.

Un tel détecteur non refroidi associe généralement :

- des moyens d'absorption du rayonnement infrarouge et de conversion de celui-ci en chaleur,
- des moyens d'isolation thermique du détecteur, de telle sorte à permettre à celui-ci de s'échauffer sous l'action du rayonnement infrarouge,
- des moyens de thermométrie qui, dans le cadre d'un détecteur bolométrique, mettent en oeuvre un élément résistif,
- et des moyens de lecture des signaux électriques fournis par les moyens de thermométrie.

Les détecteurs destinés à l'imagerie infrarouge sont classiquement réalisés sous la forme d'une matrice de détecteurs élémentaires selon une ou deux dimensions, ladite matrice étant formée de manière dite "monolithique" ou reportée sur un substrat généralement réalisé en silicium, dans lequel sont constitués des moyens d'adressage séquentiel des détecteurs élémentaires et des moyens d'excitation électrique et de pré-traitement des signaux électriques générés par ces détecteurs élémentaires. Ces moyens d'adressage séquentiel, d'excitation électrique et de pré-traitement sont donc formés sur le substrat et constituent un circuit de lecture.

Si l'intégration monolithique des détecteurs au circuit de lecture correspondant est avantageuse du point de vue des coûts de fabrication, il est cependant possible d'hybrider une matrice de détecteurs sur un tel circuit de lecture.

Le dispositif comportant une telle matrice de détecteurs élémentaires et un circuit de lecture associé est généralement placé dans un boîtier hermétique et est relié électriquement et thermiquement au milieu extérieur par des techniques classiques. Dans un tel boîtier, la pression est réduite afin de limiter les pertes thermiques des points élémentaires vers le substrat. Ce boîtier est en outre muni d'une fenêtre transparente aux rayonnements à détecter, en l'espèce infrarouges.

Pour obtenir une scène par l'intermédiaire de ce détecteur, on projette la scène à travers une optique adaptée sur la matrice de détecteurs élémentaires, et des stimuli électriques cadencés sont appliqués par l'intermédiaire du circuit de lecture à chacun des détecteurs élémentaires, ou à chaque rangée de tels détecteurs, afin d'obtenir un signal électrique constituant l'image de la température atteinte par chacun desdits détecteurs élémentaires. Ce signal est traité de manière plus ou moins élaborée par le circuit de lecture, puis éventuellement par un dispositif électronique extérieur au boîtier afin de générer l'image thermique de la scène observée.

La difficulté essentielle de mise en oeuvre des détecteurs bolométriques réside dans la très faible variation relative de leur résistance électrique, représentative des variations locales de température d'une scène observée, par rapport à la valeur moyenne de ces résistances. En effet, les lois physiques d'émission thermique dans l'infrarouge de la scène observée entre 8 et 14 $\mu$m (correspondant à la bande de transparence de l'atmosphère terrestre dans laquelle sont habituellement utilisés des détecteurs bolométriques) conduisent à une puissance différentielle dP au niveau du plan focal détecteur de l'ordre de 50 $\mu$W/cm$^2$ lorsque la température de scène varie de 1K autour de 300 K. La détermination de cette valeur est aisément à la portée de l'homme du métier, en appliquant les lois physiques précitées.

Cette estimation est valable pour une optique ouverte à f/1, une transmission élevée entre la scène et le détecteur, et lorsque le détecteur ne reçoit qu'une quantité négligeable d'énergie en dehors de la bande de longueur d'onde spécifiée, par exemple et typiquement si le boîtier est muni d'une fenêtre transparente dans cet intervalle et opaque en deçà et au-delà des limites indiquées.

Corollairement, la variation de température dT d'un bolomètre à l'équilibre thermique, liée à une puissance infrarouge dP absorbée sur sa surface S est donnée par l'expression suivante :

$$dT = Rth \cdot dP,$$

où Rth est la résistance thermique entre la partie sensible du bolomètre, qui s'échauffe sous l'effet du rayonnement infrarouge, et le substrat isotherme qui le porte, dont la température est constante ou très lentement variable.

Ainsi, pour un bolomètre de dimensions typiques de l'ordre de 30 $\mu$m x 30 $\mu$m, ce qui représente une surface de $9.10^{-4}$ cm$^2$, la résistance thermique typique est de l'ordre de 10 à 30 MK/W, ce qui conduit à un échauffement du bolomètre de l'ordre de 0,005 K à 0,015 K lorsque l'élément de scène vu par ce bolomètre varie de 1 K.

La variation de résistance dR qui en résulte est exprimée par l'expression suivante :

$$dR = TCR \; . \; dT$$

où TCR est le coefficient de variation relatif de résistance du matériau constituant la partie sensible du bolomètre au voisinage de la température de fonctionnement. Pour les matériaux usuels dans ce domaine (oxydes de vanadium, silicium amorphe), ce coefficient TCR est voisin de 2 % par K. En d'autres termes, la variation relative de résistance dR/R consécutive à un différentiel de 1 K sur la scène est donc de l'ordre de 0,02 % , où R est la résistance électrique vue entre les deux pôles d'amenée du courant au niveau de matériau sensible bolométrique.

Or, il est demandé aujourd'hui des résolutions thermiques d'imagerie nettement meilleures que 1 K et typiquement 0,05 K, voire moins. De tels résultats peuvent être obtenus par l'élaboration de structures présentant des résistances thermiques Rth très élevées de par la mise en oeuvre de techniques sophistiquées. Cependant le besoin demeure de mesurer d'infimes variations relatives de résistance et typiquement, ainsi qu'indiqué précédemment, de l'ordre de $10^{-5}$, pour résoudre des variations temporelles et spatiales de température de quelques dizaines de milliKelvins.

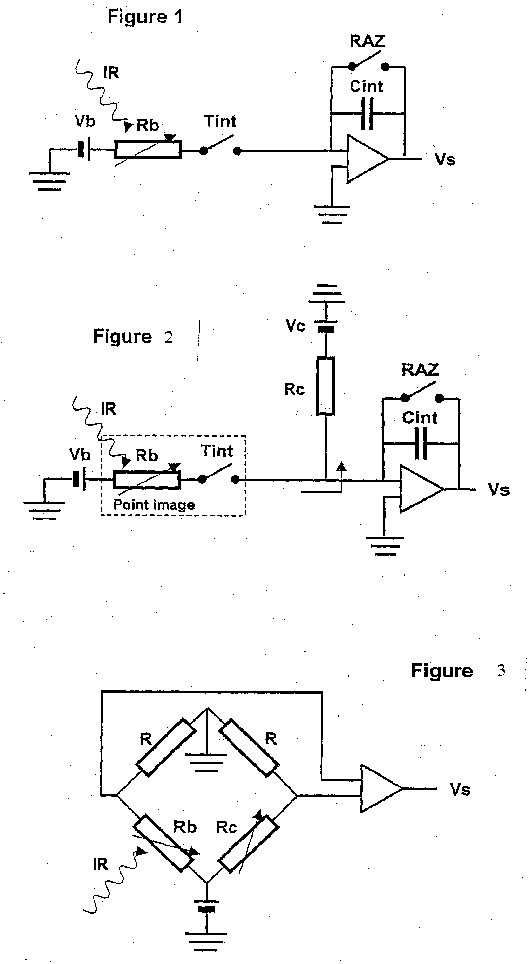

Afin d'expliciter la difficulté d'exploiter une aussi faible variation, on a schématisé en relation avec la figure 1, un moyen hypothétique simple de mesures répétées, c'est-à-dire d'échantillonnage d'une résistance électrique Rb, par exemple réalisée en un matériau bolométrique. Pour ce faire, on applique une tension de polarisation Vb aux bornes de la résistance Rb à un instant donné. Le courant résultant à travers Rb est intégré pendant une durée Tint dite "temps d'intégration" dans une capacité Cint. La tension Vs en sortie de cet intégrateur, image de la résistance Rb, est donnée par l'expression :

$$Vs = (Vb/Rb) \; . \; Tint/C$$

en admettant pour simplifier que Rb varie peu pendant la durée d'intégration Tint.

A la fin de la durée d'intégration, la tension Vs est utilisée comme signal utile d'imagerie, puis remise à zéro par l'intermédiaire d'un interrupteur de remise à zéro RAZ avant démarrage de la lecture suivante de Rb.

Ainsi, une matrice de N résistances (bolomètres) pourrait être lue selon ce principe à l'aide de l'intégration simultanée (au moyen de N intégrateurs) ou séquentielle (sur un intégrateur disposé en bout de ligne ou en bout de colonne, voire un seul intégrateur pour la matrice). Lorsque la matrice ainsi réalisée est éclairée par la projection d'une scène infrarouge, Vs va présenter des variations spatiales (issues de chaque bolomètre) représentatives de la scène. Il est rappelé que la tension Vs, telle qu'exprimée précédemment, est constituée pour une très grande part, d'une partie constante d'un détecteur à l'autre (signal dit « de mode commun »), qui ne présente donc aucun intérêt en terme d'imagerie. Seules les infimes variations de Vs liées aux différences locales (entre un bolomètre et un autre) et temporelles (la scène varie au cours du temps) de puissance optique reçue constituent le signal utile de la scène observée.

Or, les contraintes inhérentes aux circuits microélectroniques en termes de tension (quelques volts), les valeurs accessibles et maîtrisables des résistances bolométriques Rb (quelques dizaines à quelques centaines de kOhms) et la nécessité d'utiliser des durées d'intégration suffisantes pour limiter le temps d'intégration, conduiraient à mettre en oeuvre des capacités Cint de très grandes valeurs, en tout cas incompatibles avec la surface disponible dans chaque point élémentaire ou pixel de détection (de l'ordre de celle d'un bolomètre) et même en pratique incompatibles avec un report de cette capacité en marge ou au bord du circuit de lecture, où la surface n'est pas limitée à celle du point élémentaire. Il est donc nécessaire de mettre en place des modes de lecture qui limitent le courant à intégrer à des niveaux compatibles avec des capacités raisonnablement réalisables.

Une solution connue, telle que par exemple décrite dans le document « LETI/LIR's amorphous silicon uncooled microbolometer development » - Infrared Detectors and Focal Plane Arrays V, 14-17/04/98, SPIE ORLANDO, SPIE Proceedings Vol 3379, est schématisée sur la figure 2.

Cette solution consiste à dériver la majeure partie du courant de fond ou courant de mode commun (indépendant de l'éclairement) traversant chaque bolomètre de la matrice à travers une structure particulière dite "résistance de compensation" de valeur Rc, idéalement insensible à l'éclairement. Cette résistance de compensation est disposée en bout de colonne ou en bout de ligne de la matrice, et est polarisée à la tension Vc, négative par rapport au potentiel d'entrée de l'intégrateur sur une de ses bornes, et connectée à l'entrée de l'intégrateur sur l'autre borne.

Habituellement, un dispositif d'adressage (non représenté pour ne pas surcharger inutilement la figure 2) envoie successivement le courant de chaque bolomètre de la même colonne ou de la même ligne en entrée de l'intégrateur. La tension Vs en sortie d'intégrateur en fin d'intégration s'exprime alors par le quotient :

$$Vs = (Vb/Rb - Vc/Rc) \cdot Tint/C.$$

Le courant Vc/Rc est ajusté par réglage de la tension Vc et le choix de conception de Rc au voisinage de la valeur moyenne (sur la matrice) de Vb/Rb dans les conditions usuelles de fonctionnement. On supprime de cette manière du signal de sortie Vs, le niveau commun à tous les points images, indépendant de l'éclairement. Ce faisant, la dynamique de l'intégrateur (Vs max - Vs min) peut être essentiellement dédiée à la représentation des variations spatiales et temporelles des résistances Rb, c'est-à-dire de la température de chaque élément de scène.

Les documents FR 2798994, US6583416 et US6188069 divulguent des bolomètres de compensation.

On a également proposé, par exemple dans le document « On-Chip compensation of self-heating effects in microbolometer infrared detector arrays » - Sensors and Actuators A 69 (1998) 92-96, une autre solution également destinée à limiter substantiellement le niveau commun. Cette option consiste à utiliser un pont de résistances comportant dans l'une de ses branches, le bolomètre, et dans l'autre branche, une résistance de compensation, idéalement insensible à l'éclairement, selon le schéma illustré au sein de la figure 3.

Comme dans la solution précédente, on dispose d'une résistance de compensation en bout de chaque colonne ou de chaque ligne, et un système d'interrupteur (non représenté) connecte successivement chaque bolomètre de la même colonne ou de la même ligne dans le pont de résistances. Le déséquilibre du pont produit par l'échauffement du bolomètre Rb sous l'effet de l'éclairement infrarouge de la scène est utilisé en entrée différentielle de l'amplificateur colonne ou ligne.

Ces résistances de compensation peuvent être formées dans le circuit de lecture, ce qui leur procure une insensibilité naturelle à l'éclairement infrarouge. Mais de manière avantageuse, qu'elles soient utilisées en soustraction de courant ou mises en oeuvre dans un montage en pont, elles sont réalisées avec le même matériau que les résistances bolométriques de la matrice, et de préférence obtenues simultanément (c'est à dire au cours de la même opération technologique), de manière à ce que les caractéristiques de variation relative dR/RdT en température des résistances Rb et Rc soient les plus proches possibles, et idéalement identiques. En effet, cette disposition permet de compenser par construction les variations globales de température du circuit de lecture, puisque l'élément actif d'imagerie Rb et l'élément de compensation Rc présentent dans ce cas le même coefficient de température TCR, et évoluent donc ensemble, dans le même sens, et avec la même variation relative, lorsque la température du circuit de lecture fluctue autour de son point de repos.

L'élément de compensation, selon ce mode avantageux de construction à l'aide du même matériau, est typiquement disposé en bout de colonne ou en bout de ligne, de façon à limiter la surface du point élémentaire. En effet, la construction de cet élément dans le point élémentaire du détecteur implique une surface dédiée à cette construction, donc un point élémentaire finalement plus grand, ou, à surface constante, l'utilisation d'une partie de cette surface pour y insérer l'élément de compensation, se traduisant par une perte de performance de l'élément actif Rb. Or, la surface du détecteur est toujours déterminante du point de vue économique en microélectronique, notamment en composants d'imagerie, et plus particulièrement encore en imagerie infrarouge, pour lesquels le coût de l'optique, en relation avec la surface du plan focal, est prépondérant dans le coût final du système.

Ce faisant, la construction optimisée de la surface de compensation nécessite ordinairement une surface non négligeable au delà de la surface optiquement active, se traduisant par un impact économique sur le nombre de détecteurs que l'on peut réaliser collectivement sur le même substrat.

En outre, afin de mettre en oeuvre les dispositions avantageuses précitées dans des conditions techniques raisonnables, il convient d'élaborer simultanément les structures de compensation et les structures de détection (bolomètres proprement dits), à savoir la construction de membranes suspendues obtenues par dépôt de couches minces. La conséquence inéluctable de cette technologie d'élaboration est que ces structures de compensation présentent elles-mêmes un certain degré d'isolement thermique non nul par rapport au substrat constitutif du circuit de lecture, malgré les précautions de design susceptibles d'être mises en oeuvre afin d'en minimiser l'isolement thermique. Or, ces structures, mêmes si elles sont placées en dehors de la surface optiquement active (compensation déportée en bout de colonne ou en bout de ligne), sont ordinairement éclairées par l'optique au même titre que la matrice active de bolomètres. En effet, on ne peut pas les disposer très loin pour des raisons économiques de surface de substrat consommé qui définit le nombre de détecteurs par substrat unitaire, ainsi que la taille du boîtier dans lequel le dispositif de détection doit être intégré. Il en résulte une variation spatiale et temporelle en fonctionnement des résistances Rc (du courant de compensation) qui perturbe la qualité de l'image et limite les performances du composant, en particulier en cas de fort éclairement local sur les structures de compensation.

Par ailleurs, le courant qui traverse ces structures de compensation tend à les échauffer, puisque leur résistance thermique, même faible, n'est pas nulle. De manière simplifiée mais représentative, l'élévation de température ΔT d'un bolomètre en fonction du temps au cours de l'intervalle d'intégration 0 < t < Tint est donnée par l'expression :

$$\Delta T \,\#\, (Vb^2/Rb) \,.\, Rthb \,(1 - \exp(-t/Rthb \,.\, Cthb)))).$$

Dans cette expression :

-  $Vb^2/Rb$ est la puissance électrique développée pendant l'intégration à travers le bolomètre ;
-  Rthb et Cthb sont respectivement la résistance et la capacité thermique du bolomètre ;
-  le produit Rthb . Cthb représente la constante de temps de retour à la température d'équilibre en l'absence de polarisation (typiquement quelques milli-secondes, soit beaucoup plus que le temps d'intégration ordinairement de quelques microsecondes).

Il s'ensuit que l'échauffement du bolomètre en fin d'intégration sous l'effet du courant de lecture est approximativement donné par l'expression :

$$\Delta Tb \,\#\, (Vb^2/Rb) \,.\, Tint \,/\, Cthb$$

qui ne dépend pas de la résistance thermique du bolomètre, mais plutôt de sa capacité thermique.

Une relation équivalente est obtenue pour la résistance de compensation Rc :

$$\Delta Tc \,\#\, (Vc^2/Rc) \,.\, Tint \,/\, Cthc$$

dans le cas général où la constante de temps Rthc . Cthc de la résistance de compensation est grande également devant Tint.

Dans le cas où ΔTb est différent de ΔTc, cette différence induit un différentiel de courant indépendant de l'éclairement de l'élément actif, donc un signal intégré inutile qui réduirait dramatiquement la dynamique de température de scène du circuit de lecture. En effet, la puissance électrique de lecture est beaucoup plus élevée que la puissance infrarouge à détecter : usuellement l'échauffement de lecture est de 0,5 à quelques degrés, soit la variation de la résistance Rb aisément de l'ordre de quelques %, à comparer à 0,001 % correspondant à la variation de quelques dizaines de milliKelvin de température de scène comme évaluée précédemment. Il s'ensuit qu'il est indispensable d'éliminer l'essentiel du courant différentiel lié à l'échauffement électrique.

Dans le cas d'une intégration telle qu'enseignée dans la publication précitée du LETI, cet échauffement différentiel de lecture n'est pas gênant, puisqu'il suffit de modifier légèrement l'une des tensions Vb ou Vc pour compenser les différences de courant supplémentaire d'échauffement.

Le second document cité enseigne que l'intégration différentielle à partir d'un pont de résistances permet, si ΔTb # ΔTc, ce qui implique Rc # Rb et Cthc # Cthb (puisque Vb = Vc dans un montage en pont équilibré), de compenser non seulement le courant de mode commun, mais aussi le courant supplémentaire lié à l'échauffement électrique du bolomètre pendant la durée d'intégration.

Pour une matrice de n lignes, les résistances Rc disposées en bout de colonne sont excitées n fois plus souvent qu'un bolomètre de la matrice. Elles doivent de ce fait présenter une durée de retour à l'équilibre suffisamment faible pour retourner au voisinage de la température du substrat entre deux durées d'intégration consécutives (le temps de lire une ligne complète). Il s'ensuit, puisque Cthc est fixée au voisinage de Cthb, que Rthc doit être relativement faible. Cependant, afin que l'échauffement des structures actives et de compensation reste comparable, Rthc ne peut pas non plus être très faible. Finalement dans le cas de la lecture à partir d'un pont de résistances, la sensibilité optique du détecteur au niveau des structures de compensation ne peut donc pas être négligeable.

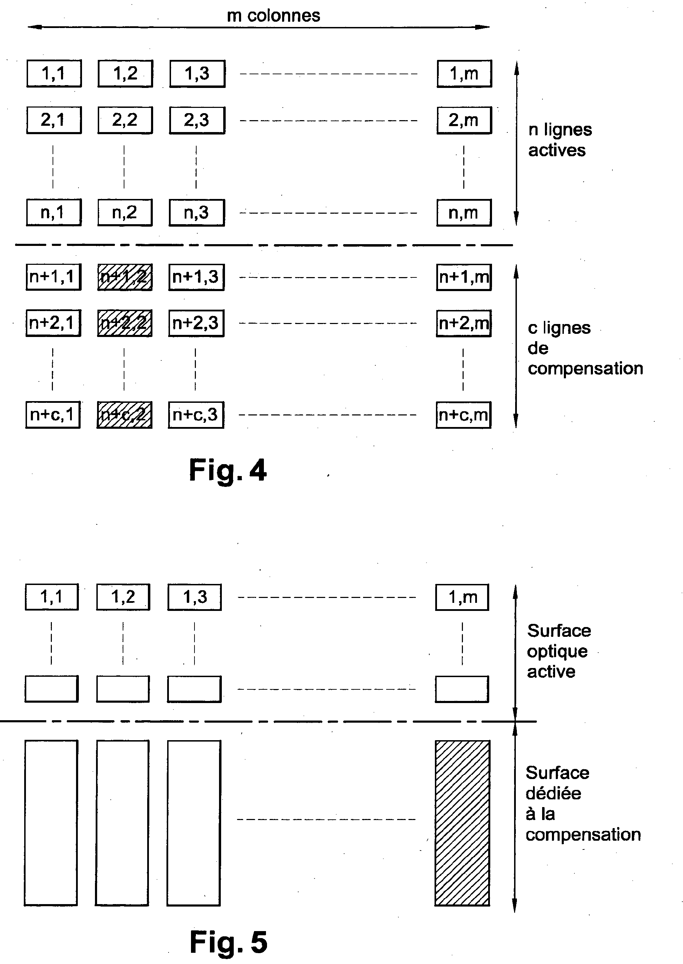

On a représenté en relation avec les figures 4 et 5 une représentation schématique d'un agencement conforme au premier des documents cités de l'art antérieur. En l'espèce, les figures 4 et 5 illustrent une matrice de n lignes et de m colonnes de détecteurs bolométriques, identifiés par leurs coordonnées respectives en fonction de leur positionnement.

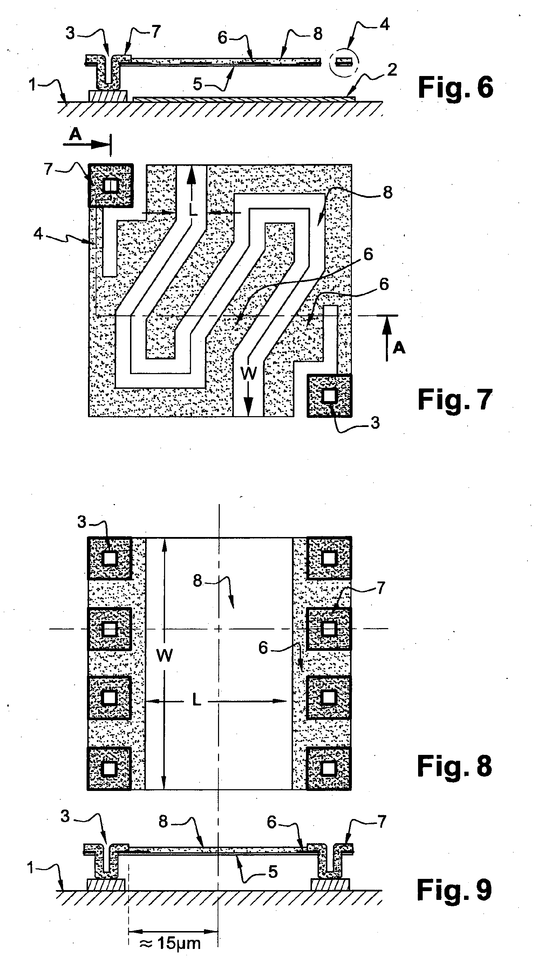

La surface dite « active » regroupe l'ensembles des résistances Rb réalisées en matériau bolométrique positionnées selon les m lignes et n colonnes. Un exemple d'un tel détecteur est par exemple détaillé en relation avec les figures 6 et 7.

Corollairement, la compensation mise en oeuvre dans cet exemple, positionnée en bout de colonne, comporte c lignes et m colonnes (Cf. Figure 4). Cependant, on pourrait concevoir, ainsi qu'illustrée en figure 5, la mise en oeuvre de zones de compensation présentes à l'extrémité de chacune des colonnes de la zone « active » de détection, non plus constituées de surfaces élémentaires différenciées, mais de zones allongées en forme de colonne. Le point essentiel réside en effet dans la surface effective et disponible de compensation pour chacune des colonnes de la zone « active » de détection. En revanche, chacune des colonnes de compensation est bien différenciée des colonnes adjacentes.

On a représenté en relation avec les figures 8 et 9 un exemple des zones de compensation conformes à l'état antérieur de la technique.

Afin de pallier l'inconvénient structurel lié à la sensibilité optique non négligeable du détecteur au niveau des structures de compensation, on a proposé d'intercaler un écran opaque, entre la matrice active de détection et les structures de compensation, et typiquement à l'intérieur du boîtier pour rester à proximité du plan focal et limiter ainsi les effets d'ombre au-dessus de ces structures. Un tel écran est par exemple mis en place au niveau de l'espace, représenté dans les figures 4 et 5 par un trait discontinu.

Cependant, cette solution engendre un impact économique conséquent : fabrication plus complexe, précision élevée de l'assemblage, coût en surface de circuiterie microélectronique, volume du boîtier.

Une autre limitation de la technique ainsi décrite réside dans le bruit électrique rapporté par la structure de compensation. En effet, les matériaux habituellement utilisés en microbolométrie, en particulier les matériaux amorphes, présentent un bruit basse fréquence en 1/f (f pour fréquence), qui détermine largement la performance des détecteurs. L'expérience montre que la puissance de bruit en courant relativement au courant lui-même (Vb/Rb) est proportionnelle à $1/Vb^{1/2}$, où Vb est le volume actif du matériau bolométrique. Le volume actif se rapporte au volume des matériaux bolométriques effectivement parcouru par les lignes de courant lors du fonctionnement des structures. Cette relation s'applique aux bolomètres actifs (Rb), comme à l'élément de compensation (Rc) puisque celui-ci est réalisé avec le même matériau et parcouru essentiellement par le même courant. Le bruit global résultant sur le signal Vs est alors proportionnel à :

$$((1/\textbf{\textit{V}}b) + (1/\textbf{\textit{V}}c))^{1/2}$$

où Vb et Vc sont respectivement les volumes actifs des éléments Rb et Rc. On observe de fait que pour ne pas trop ajouter de bruit basse fréquence à ce que donnerait le bolomètre Rb seul, il convient de maximiser le volume de l'élément Rc.

En pratique, la dégradation de performance inhérente au bruit additionnel lié à l'élément Rc, est négligeable lorsque Vc est au moins dix fois plus grand que Vb. Les structures actives et de compensation étant préférentiellement obtenues lors de la même opération technologique, l'épaisseur de matériau bolométrique est par construction identique sur ces deux types de structures, et en conséquence, c'est la surface active (concernée par les lignes de courant) des éléments Rc qui devra être dix fois plus élevée que celle des éléments Rb. Cela signifie qu'il conviendrait d'ajouter typiquement l'équivalent de dix lignes supplémentaires (pour une structure de compensation disposée en bout de colonne) en bordure de matrice d'imagerie pour y loger les structures de compensation. Cette contrainte d'encombrement n'est peut être pas très significative pour des matrices à très grand nombre de points ou pixels, mais devient à considérer en terme de nombre de produits par substrat, pour des détecteurs de surface réduite.

Il doit être souligné que la mise en oeuvre de structure de compensation de grande surface, comme préconisé, implique que Cthc soit beaucoup plus grand que Cthb, et donc que l'échauffement pendant le pulse de lecture soit beaucoup plus faible. Il a été indiqué que si cette condition n'est pas déterminante dans le cadre de la solution technique proposée dans la publication précitée du LETI, en revanche, dans le cadre d'une mise en oeuvre selon montage en pont, telle que décrite dans l'autre publication mentionnée (« On-Chip compensation of self-heating effects in microbolometer infrared detector arrays »), il est indispensable que Cthc # Cthb, autrement dit, que la structure de compensation doit, dans ce cas, nécessairement présenter un volume Vc voisin du volume Vb de l'élément actif (puisque Vc et Cthc sont étroitement liés), et il est, en conséquence impossible de minimiser le bruit ramené par la compensation.

La présente invention vise un dispositif de détection selon la revendication 1 mettant en oeuvre des structures de compensation à sensibilité résiduelle pratiquement nulle, rendant inutile l'intégration d'écrans opaques dans le boîtier, et qui limite significativement l'espace dédié à ces structures malgré un niveau de bruit ajouté négligeable.

Ce dispositif de détection infrarouge comprend une matrice de détecteurs bolométriques, connectés électriquement à un circuit de lecture, et associée à une structure de compensation destinée à dériver la majeure partie du courant électrique de fond ou courant de mode commun traversant chacun des détecteurs bolométriques de la matrice.

Selon l'invention, la structure de compensation est constituée d'une couche simple ou complexe comprenant au moins un matériau bolométrique s'étendant entre deux zones de connexion électrique reliées au circuit de lecture et en ce que ladite couche intégrant le matériau bolométrique constitutif de la structure de compensation est elle-même en contact thermique avec le substrat constitutif du circuit de lecture en dehors des zones de connexion électrique.

Il en résulte une conductivité thermique élevée par rapport aux techniques antérieures permettant d'uniformiser le transfert thermique entre le matériau bolométrique constitutif de la structure de compensation et le circuit de lecture. Ce faisant, on élimine de manière substantielle, les défauts inhérents à l'échauffement optique des éléments constitutifs de ladite structure de compensation.

Selon une caractéristique de l'invention, le matériau constitutif de la structure de compensation est identique au matériau bolométrique constitutif des bolomètres assurant la détection active et appartenant à la matrice de détection.

Ces structures de compensation sont situées en bout de lignes ou en bout de colonnes de la matrice de détecteurs.

Selon une forme de réalisation de l'invention, la couche intégrant le matériau bolométrique constitutive des structures de compensation présente des ondulations dans un plan vertical, lesdites ondulations s'étendant parallèlement aux lignes ou aux colonnes de la matrice de détection, toute ou partie des extrémités inférieures des ondulations venant en contact thermique avec le substrat constitutif du circuit de lecture.

Selon une autre forme de réalisation de l'invention, la couche intégrant le matériau bolométrique constitutive de la structure de compensation présente un certain nombre de puits ou piliers, dont l'extrémité inférieure vient en contact thermique avec le substrat constitutif du circuit de lecture.

La manière de réaliser l'invention et les avantages qui en découlent ressortiront mieux de l'exemple de réalisation qui suit, donné à titre indicatif et non limitatif à l'appui des figures annexées.

La figure 1 est une représentation schématique du circuit électrique simplifié d'échantillonnage d'un détecteur bolométrique, conforme à l'état antérieur de la technique.

La figure 2 est une représentation schématique du circuit électrique simplifié d'un mode de compensation du courant de mode commun selon une forme de réalisation de l'état antérieur de la technique.

La figure 3 est une vue analogue à la figure 2 d'une autre forme de réalisation de l'état antérieur de la technique.

La figure 4 est une représentation schématique d'une matrice de détecteurs bolométriques à n lignes et m colonnes, illustrant le principe général de la compensation, en l'espèce en bout de colonnes, dont la figure 5 est une vue analogue d'une forme de réalisation légèrement différente.

La figure 6 illustre schématiquement un détecteur bolométrique conforme à l'état antérieur de la technique, dont la figure 7 est une vue en section selon la ligne AA.

La figure 8 illustre schématiquement un élément constitutif d'une structure de compensation conforme à l'état antérieur de la technique, dont la figure 9 est une vue en section selon la ligne BB.

La figure 11 illustre schématiquement un élément constitutif d'une structure de compensation conforme à la présente invention, selon trois configurations possibles, dont la figure 10 est une vue en section de l'un des modes, réalisée selon la ligne AA.

La figure 6 a pour objectif d'illustrer un détecteur bolométrique traditionnel, afin de bien montrer les différences d'un élément constitutif d'une structure de compensation au sens de la présente invention.

Ainsi, ce détecteur actif, correspondant à la résistance Rb des schémas électriques des figures 1 à 3, est du type décrit par exemple dans le document FR-A-2 752 299. Si l'illustration qui en a été retenue a été simplifiée à l'extrême, il est cependant bien entendu que cette forme de réalisation ne saurait constituer une quelconque réduction de la portée de l'invention, et que notamment tout type de détecteurs bolométriques est réputé couvert par celle-ci, tel que par exemple ceux décrits par les enseignements du document FR-A-2 796 148.

Dans la suite de la description, le même numéro de référence identifie des éléments identiques ou de même nature fonctionnelle lorsque cela peut s'appliquer.

Au sein de la figure 6, on a représenté par la référence (1) le substrat en silicium sur lequel est réalisé le circuit de lecture. Ce substrat (1) est traditionnellement recouvert, au niveau des structures actives (Rb), c'est à dire à l'aplomb des zones constituées de matériau bolométrique, d'une couche métallique réfléchissante (2). Cette dernière est destinée, de manière connue, à renvoyer le rayonnement non absorbé par le matériau bolomètre lui-même et situé à environ 1,5 à 2,5 $\mu$m au dessus du réflecteur (2) au niveau dudit matériau bolométrique. Les distances indiquées ci-dessus tiennent compte de l'optimisation de détection recherchée pour un rayonnement de longueur d'onde voisine de 10 $\mu$m

Le matériau bolométrique est donc suspendu au dessus du circuit de lecture au moyen de structures essentiellement verticales (3), conductrices de l'électricité. Ces structures sont réalisées à l'aide d'un matériau métallique (7), sont destinées en outre à amener les potentiels d'excitation générés par le circuit de lecture vers les parties conductrices (6), également dénommées électrodes, du détecteur bolométrique, via des structures allongées (4), également conductrices électriquement, mais résistantes thermiquement.

Cette résistance thermique, dite aussi « isolation thermique » est destinée à permettre l'échauffement du bolomètre sous l'effet du rayonnement infra-rouge à détecter.

**EP 1 637 854 B1**

Le circuit de lecture applique, via les éléments (3) et (4), et via au moins deux parties conductrices (6), un courant électrique qui traverse la structure parallèlement au plan du détecteur bolométrique. Ce courant circule à travers un matériau (8), dont la résistivité varie avec la température, qu'on appelle matériau bolomètre.

Les matériaux les plus répandus pour cet usage sont l'oxyde de vanadium (formule générique VOx) et le silicium amorphe (a-Si).

Les électrodes (6) sont réalisées à l'aide d'une couche fine conductrice, ordinairement métallique. Dans l'exemple décrit, les électrodes (6) sont disposées sur la surface inférieure du matériau bolomètre (8). Elles peuvent également participer à l'absorption du rayonnement infrarouge.

Le mode particulier de réalisation de ce détecteur bolométrique n'est nullement limitatif. Ainsi, la forme des électrodes (6) et des parties (3) et (4) pourrait être très différente. En particulier le dessin des électrodes (6) est choisi de telle sorte que la valeur préférée de la résistance électrique Rb puisse être obtenue entre les deux pôles électriques (3) du dispositif.

Les électrodes (6) et le matériau bolomètre (8) sont supportés par une couche isolante (diélectrique) (5), typiquement de l'oxyde ou du nitrure de silicium. Cette couche est optionnelle, mais facilite l'assemblage de la structure selon l'invention.

La résistance électrique Rb est essentiellement définie par la résistance obtenue entre les deux électrodes (6), elle même proportionnelle au rapport L/W, où L et W désignent respectivement la longueur et la largeur électrique de la surface active de matériau bolomètre (8).

La figure 8 illustre un élément d'une structure de compensation de type connu. Telle qu'illustrée, cet élément de compensation Rc est supposé avoir été réalisé simultanément avec l'élément actif de détection Rb de la figure 6. En effet, en raison de ce processus d'élaboration simultanée, c'est à dire au cours de la même opération technologique, les caractéristiques de variation relative dR/RdT en températures des résistances Rb et Rc sont les plus proches possibles, voire identiques.

Au niveau de cet élément de compensation Rc, le substrat (1) n'est préférentiellement pas recouvert de matériau réflecteur, afin de limiter l'absorption infrarouge dans la membrane suspendue réalisée en matériau bolomètre (8). La résistance thermique est minimisée typiquement par la réalisation de plusieurs structures de maintien et contact électrique essentiellement métalliques (3), de part et d'autre de la résistance Rc formée entre les deux électrodes (6) par ledit matériau bolomètre (8). La résistance thermique d'une telle construction, bien que faible, est suffisante pour produire un léger échauffement de la partie centrale, en particulier sous fort éclairement. Cet échauffement est suffisant pour perturber la fonction de compensation électrique du bolomètre sensible Rb. Ceci est d'autant plus sensible que la distance L est faible, car la surface recouverte par les électrodes (6) est par construction absorbante pour les rayons infrarouges. Or, on est conduit à ajuster par construction la résistance Rc (typiquement à une valeur proche de Rb) par ajustement de la distance L entre les deux électrodes (6). On peut aussi ajuster la résistance Rc en jouant sur la largeur W, mais dans cette dimension, le rapport entre la puissance infrarouge incidente (proportionnelle à la surface de la structure) et la résistance thermique (inversement proportionnelle à W) est constant, il s'ensuit que l'échauffement « optique » est constant.

Dans le cas général où au moins l'un des autres matériaux constituant la membrane suspendue est lui-même absorbant pour les rayonnements infrarouges, tel que par exemple l'oxyde de silicium, et plus particulièrement le nitrure de silicium, très généralement utilisé dans ce type de dispositif, la partie interne de la membrane, sur toute sa surface, absorbe le rayonnement, et il n'y a aucun moyen de limiter l'échauffement « optique » au niveau du design des électrodes.

Ordinairement, la structure correspondant à la figure 8 doit être répétée au moins cinq à dix fois, avec par exemple des connexions en parallèle, ou parallèle-série, afin d'obtenir une résistance globale Rc comparable à Rb, ainsi que les développements qui précèdent le requièrent, et en outre pour n'ajouter qu'une contribution négligeable au bruit global de la lecture compensée du bolomètre Rb.

Il est également possible d'allonger la structure décrite en relation avec la figure 8 dans le sens de la grandeur W (largeur électrique), avec le même résultat qu'un assemblage électrique en parallèle de plusieurs éléments séparés de compensation identiques, tels que représentés sur la figure 6, sans rien changer aux raisonnements qui précèdent.

On a cependant déjà démontré, que dans un cas comme dans l'autre, la multiplication de ces structures de compensation était consommatrice en surface de substrat, et donc en coût de réalisation par le biais du nombre de détecteurs élémentaires par substrat et de la diminution de rendement associé à la surface, et en outre dans tous les cas, la « réponse optique » des structures de compensation n'est pas nulle.

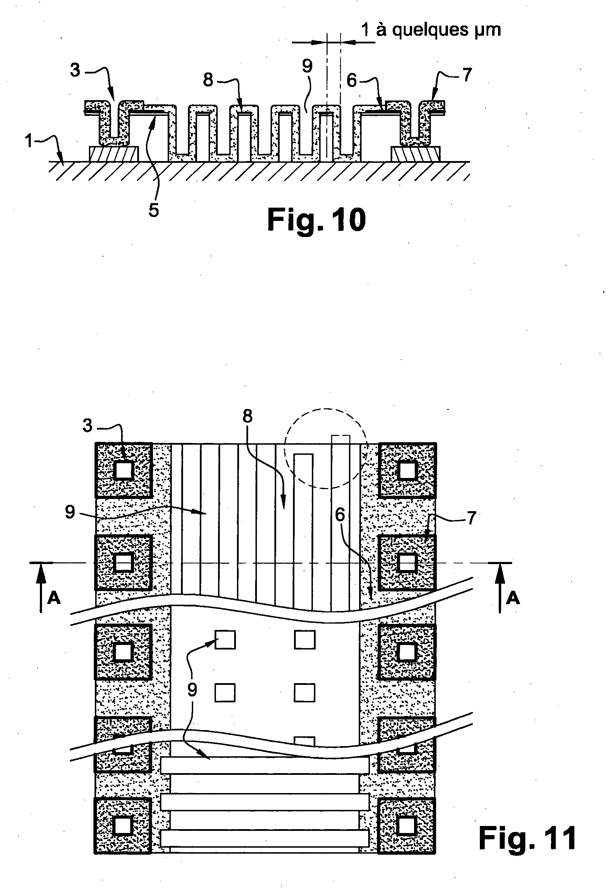

L'invention propose donc la mise en oeuvre d'une structure de compensation du type de celle décrite en relation avec les figures 10 et 11.

Ainsi, la figure 10 explicite la construction des éléments de compensation Rc, en relation avec les éléments actifs, selon un processus d'élaboration simultané. Les éléments actifs ne sont typiquement pas modifiés.

La figure 11 est partagée en trois zones, visant à représenter chacune une forme de réalisation particulière de la structure selon l'invention, mais réalisées selon le même principe et la même technique de réalisation.

Selon l'invention, la caractéristique majeure réside dans le fait que la partie centrale de l'élément de compensation, comprise entre les structures conductrices électriques (3), présente des extensions (9) en direction du circuit de lecture, jusqu'à aboutir à un contact thermique avec celui-ci. Il en résulte une conductance thermique élevée par rapport aux techniques antérieures entre ledit substrat, dont la température est constante ou très lentement variable, et la membrane constituant la résistance de compensation Rc, diminuant ainsi drastiquement la réponse optique de la structure de compensation, et corollairement, la qualité des images obtenues avec le détecteur bolométrique.

De manière particulière, et ainsi que représenté sur les figures 10 et 11, ces contacts thermiques (9) sont régulièrement répartis sur la surface de l'élément de compensation, de manière à uniformiser le transfert thermique entre la membrane et le circuit de lecture (1), afin d'obtenir la conduction maximale, pour la surface minimale de contacts thermiques (9).

En outre, selon une forme particulière de réalisation de l'invention, ces contacts thermiques sont constitués en totalité du matériau bolométrique (8) lui-même. Cette disposition est avantageuse pour au moins deux raisons :

- d'une part, ordinairement le matériau bolométrique constitue l'essentiel de la masse des matériaux constituant la membrane ; il est donc préférable, pour obtenir une conductance thermique « verticale » élevée d'utiliser ce matériau dans la construction des contacts thermiques ;
- d'autre part, cette disposition permet, selon les caractéristiques du dépôt du matériau bolométrique, d'utiliser la géométrie de ces contacts thermiques pour la définition de la résistance Rc, et donc également du bruit électrique généré par cette résistance, puisque ce bruit est défini par le volume de matériau actif : on a avantage à utiliser un volume actif maximal dans une surface (projetée sur le circuit de lecture) minimale.

La partie supérieure de la figure 11 représente le cas où les contacts thermiques (9) résultent d'une pluralité d'ondulations de la zone active de l'élément de compensation, parallèles au bord des électrodes (6). Cette configuration permet d'augmenter la résistance Rc vue entre ces électrodes, à surface projetée constante, tout en diminuant très sensiblement la résistance thermique, et le bruit électrique.

La partie centrale de la figure 11 représente le cas où les contacts thermiques (9) ont une forme de piliers ou de puits. Dans l'exemple décrit, ces piliers ou puits sont de forme carrée, mais toute autre forme est envisageable. Cette configuration dénommée « ponctuelle », permet de diminuer sensiblement la résistance thermique, sans modifier pour l'essentiel la résistance Rc ou le bruit électrique. Les dimensions des puits peuvent être choisies de telle sorte que la cavité qu'ils définissent soit complètement remplie de matériau bolométrique. On obtient ainsi des piliers pleins qui procurent les mêmes avantages que la configuration précédente, en limitant au maximum la surface de membrane active (plane) consommée.

La partie inférieure de la figure 11 représente le cas où les contacts thermiques (9) résultent d'une pluralité d'ondulations de la zone active de l'élément de compensation, perpendiculaires au bord des électrodes (6). En d'autres termes, lesdites ondulations s'étendent perpendiculairement par rapport aux zones (3, 6, 7) de connexion électrique desdites structures sur le circuit de lecture (1). Cette configuration permet de diminuer la résistance Rc vue entre ces électrodes, à surface projetée constante, tout en diminuant très sensiblement la résistance thermique et le bruit électrique.

La mise en oeuvre des structures réalisées selon la configuration dite « ponctuelle » (piliers ou puits) permet d'éliminer substantiellement les défauts des techniques antérieures en termes d'échauffement optique des éléments de compensation, et corollairement d'améliorer significativement les performances de détection du dispositif, auquel de telles structures de compensation sont associées.

La mise en oeuvre des structures réalisées selon les configurations dites « linéaires » (ondulations) permet de diminuer la surface occupée sur le circuit de lecture à bruit électrique constant, ou de diminuer le bruit électrique de compensation, à surface occupée constante, avec une élimination substantielle des défauts des techniques antérieures en termes d'échauffement optique des éléments de compensation avec le même corollaire que celui précédemment mentionné.

Il va être décrit ci-après un mode de réalisation de l'invention. Ce mode de réalisation n'est nullement limitatif de la portée effective de l'invention, dans la mesure où des variantes de dessin en termes géométriques, ou d'assemblages des diverses couches, peuvent être envisagées pour conduire à la mise en oeuvre du principe directeur de l'invention, tel que précédemment décrit.

Le circuit de lecture (1) ou substrat, comportant les fonctions électroniques adéquates d'adressage et d'intégration, est, ainsi que déjà précisé, traditionnellement recouvert d'un matériau réfléchissant dans l'infrarouge, typiquement métallique, et par exemple une couche d'aluminium de 0,03 à 1 $\mu$m d'épaisseur, et de préférence uniquement au droit des structures actives (bolomètres) (Cf. figure 6). Cette couche est définie selon un premier « niveau lithographique » selon les termes du métier, et gravure sélective sur la passivation du substrat à l'aide de techniques conventionnelles.

Une couche de matériau dit « sacrificiel », c'est à dire destiné à être éliminé en fin de processus, est déposée selon une technique bien connue de l'homme du métier au dessus du circuit de lecture ainsi recouvert. Ce matériau sacrificiel est par exemple et typiquement constitué par du polyimide, et présente une épaisseur comprise entre 1,5 et 2,5 $\mu$m Cette gamme d'épaisseurs est destinée à produire l'effet d'absorption privilégiée dans la bande de transparence de l'atmosphère terrestre de 8 à 14 $\mu$m de longueurs d'onde.

De manière optionnelle, mais utile pour la suite du processus de réalisation, une couche d'un matériau diélectrique (5) est déposée en surface du matériau sacrificiel. Ce matériau diélectrique est typiquement constitué d'oxyde ou du nitrure de silicium. Il présente une épaisseur de l'ordre de 0,01 à 0,5 $\mu$m.

Une couche métallique (6), présentant une résistance de couche de l'ordre de 200 Ohm/carré est déposée ensuite sur l'intégralité de la couche (5). Cette couche est destinée à optimiser l'absorption du rayonnement infrarouge. Elle est ordinairement constituée de titane ou de nitrure de titane. L'expression résistance de couche est bien connue de l'homme du métier, et désigne classiquement la résistance d'une ligne, dont la largeur serait égale à la longueur et donc correspondant à un carré).

Un second masque lithographique est utilisé pour graver les deux couches (6) et (5), et toute l'épaisseur de la couche sacrificielle, selon les parties essentiellement verticales (3), à l'aide de techniques connues de gravure dite sèche, jusqu'aux parties superficielles constitutives du substrat (typiquement, les entrées électriques du circuit de lecture). La couche (6) peut être déposée après cette opération, si elle permet de réaliser un contact de qualité suffisante sur les entrées du circuit de lecture, au fond des parties verticales (3).

Un matériau métallique (7) est alors déposé en surface, qui vient réaliser des piliers formant la jonction électrique entre la couche (6) et les entrées du circuit de lecture. Ce matériau est défini de manière sélective sur la couche (6), à l'aide d'un troisième niveau lithographique, selon de petites surfaces débordant des parties (3). Le matériau (7), qui peut être composé de plusieurs couches différentes, est choisi parmi les matériaux traditionnels pour cet usage en microélectronique : aluminium, titane, nitrure de titane, tungstène, etc. Typiquement, on peut disposer une densité élevée de piliers (3) de part et d'autre des structures de compensation, de manière à obtenir ultérieurement une résistance thermique faible de ces structures, alors que cette densité doit être la plus faible possible dans la zone des structures actives dévolues à la détection, puisqu'elles ne sont pas utiles en termes de détection.

Un quatrième niveau lithographique est appliqué pour définir les électrodes (6) dans le matériau (6), tel que par exemple selon la technologie décrite dans le document du LETI précité.

Un cinquième niveau lithographique est appliqué pour définir les contacts thermiques (9). La couche (5), si elle existe et toute l'épaisseur du matériau sacrificiel sont gravés de manière essentiellement verticale jusqu'à la surface du substrat (1), à l'aide de techniques connues. La couche (5) trouve ici son intérêt, en temps que masque secondaire pour la gravure de la couche sacrificielle. Typiquement, les contacts thermiques (9) ne s'appuient pas sur des surfaces recouvertes par la couche (6), bien que ceci ne soit pas exclu, comme représenté localement sur la partie inférieure de la figure 10.

Le matériau bolomètre (8), typiquement du silicium amorphe ou un alliage apparenté de formule générique $Si_xGe_yC_{(1-x-y)}$ est ensuite déposé sur l'ensemble, avec une épaisseur typiquement comprise entre 0,05 et 1 $\mu$m D'autres matériaux sensibles à la température sont utilisables. Ce matériau forme localement, au niveau des contacts (9), un pont thermique direct entre la surface du substrat (1) et le niveau de la membrane (l'ensemble des diverses couches déposées en surface du matériau sacrificiel).

Les caractéristiques du dépôt dans les structures (9) interviennent au niveau du résultat en termes d'efficacité de mise en oeuvre de l'invention. Les matériaux du type silicium amorphe ou apparentés sont idéaux, car la couverture « verticale » des structures (9) est alors de bonne qualité, voire parfaite, du fait de qualités propres des procédés traditionnels de dépôt de ces matériaux, notamment par « CVD » (selon la terminologie anglo-saxonne Chemical Vapor Deposition) ou des procédés apparentés. En effet, il est possible d'obtenir une épaisseur relativement constante entre le haut et le bas des parties verticales (9), ainsi que représenté sur la figure 11. il en résulte que non seulement la résistance thermique est optimisée à une très faible valeur, mais aussi que le bruit électrique dans les structures de compensation s'en trouve nettement amélioré, à surface projetée constante, ainsi qu'exposé précédemment.

L'application de l'invention à la mise en oeuvre d'autres matériaux, dont les procédés de dépôt ne présentent pas ces caractères avantageux, ou de manière limitée, est traitée par exemple par une variante exposée plus loin.

Ainsi que déjà mentionné, le dessin des parties (9) détermine la valeur de la résistance électrique Rc vue entre les deux électrodes (6) de l'élément de compensation de l'invention. Cette résistance électrique peut être diminuée, maintenue, ou augmentée par rapport à la configuration de référence, selon le nombre (le pas) et l'orientation des motifs (9). Pour des rainures par exemple au pas de 4 $\mu$m, et profondes de 2 $\mu$m, la résistance Rc vaut 0,5 fois ou 2 fois la résistance de référence de l'élément de compensation illustré au sein de la figure 8 à surface projetée constante, selon que les rainures sont parallèles ou perpendiculaires aux lignes de courant. Simultanément, le bruit basse fréquence amené par la résistance Rc est diminué de 40%, ce qui autorise la mise en oeuvre d'une surface d'autant plus faible des éléments dévolus à la compensation pour obtenir le même niveau de bruit sur le signal compensé.

Un sixième niveau lithographique est appliqué pour définir les contours des membranes suspendues, dont les matériaux constitutifs (8), (6) et (5) sont gravés par des techniques classiques jusqu'à découvrir la couche sacrificielle. La configuration des parties (9), telles que représentées sur les zones centrale et inférieure de la figure 10, ne pose pas de difficultés particulières.

En revanche, la configuration selon la zone supérieure de ladite figure 8 demande une gravure jusqu'au substrat, pour couper complètement les parties profondes du matériau (8) jusqu'au substrat. Cette exigence est contraignante sur les caractéristiques du procédé de gravure. Il est possible de ménager l'extrémité des rainures définissant les contacts (9) légèrement en deçà des limites du sixième masque pour éviter ce problème.

Une autre manière de procéder consiste au contraire à prolonger les rainures destinées à définir les contacts (9) au delà des limites du sixième masque lithographique, typiquement d'une distance comparable à la profondeur des rainures (soit entre 1,5 et 2,5 $\mu$m). Ces deux possibilités sont représentées en traits discontinus encerclés sur la figure 11.

La configuration de la partie inférieure de la figure 11 pourra être préférée, dans la mesure où il est préférable que les extrémités des rainures définissant les contacts (9) empiètent de l'ordre de 1,5 à 2,5 $\mu$m sur les électrodes (6), de manière à éviter que la largeur électrique W soit localement plus étroite. Ces dispositions préférentielles de détail tendent à limiter le bruit basse fréquence de la résistance de compensation, et conduisent à une meilleure maîtrise de la résistance Rc, compte tenu de la statistique de positionnement des divers niveaux lithographiques entre eux.

La fin du processus d'élaboration consiste en l'élimination de la couche sacrificielle, par des moyens de gravure isotrope oxydante, par exemple sous plasma d'oxygène, bien connus en technique microélectronique.

Une estimation grossière du gain en conductance thermique de la structure de compensation selon l'invention peut être observée de la manière suivante. Pour un dispositif de détection de type matriciel, dont le pixel ou détecteur élémentaire est dessiné au pas de 35 $\mu$m par exemple, c'est à dire dont l'arête mesure un peu moins de 35 $\mu$m, il est observé que les points de la membrane de l'élément de compensation situés le long de l'axe central vertical représenté en traits discontinus sur les figures 8 et 9, ces points « voyant » la résistance thermique la plus grande car situés en des lieux les plus éloignés des parties (7), lesdites parties (7) étant considérées comme isothermes avec le substrat (1), sont distants de 15 $\mu$m environ desdites parties (7) selon les enseignements de l'état antérieur de la technique, alors que cette distance peut être réduite vers 1 à 2 $\mu$m avec le dispositif de l'invention.

L'amélioration de conductance thermique est ainsi de l'ordre d'un facteur 10. Si l'on considère que selon l'invention, une proportion nettement plus faible de matériau actif (8) est éloignée du substrat (1), puisqu'une partie est déposée directement au contact de ce dernier, il est possible d'obtenir une augmentation de conductance thermique de plusieurs dizaines de fois par rapport aux dispositifs connus, selon la disposition et la densité des parties (9).

Dans le cas où les caractéristiques du dépôt du matériau sensible (8) ne permettent pas de réaliser aisément la configuration représentée sur la figure 11, ce qui est le cas par exemple lorsque l'on met en oeuvre comme matériau bolométrique des oxydes de vanadium (VOx) déposés par PVD (selon la terminologie anglo-saxonne Physical Vapor Deposition), il est possible selon un mode de réalisation particulier, de déposer par exemple une couche conductrice thermique avant ou après le dépôt du matériau sensible, dans les motifs ou parties (9), c'est-à-dire après leur formation. Ces matériaux étant typiquement métalliques, il peut être nécessaire d'intercaler une couche diélectrique entre ce matériau conducteur thermique et le matériau sensible. Cette couche (ou ces couches) peuvent être avantageusement éliminées de la surface de la membrane, par des procédés traditionnels de gravure, au moins sur la surface concernée par les structures actives, de manière à ne pas augmenter la masse thermique ou/et la conductance thermique des bolomètres actifs réalisés simultanément. Ces couches peuvent être conservées sur les structures de compensation.

Selon un autre mode particulier de réalisation de l'invention, les parties (9) peuvent être entièrement remplies de matière. Cela peut notamment être le cas si le matériau sensible (8) est déposé par un procédé de couchage sous forme liquide (matière organique ou matériau minéral déposé par procédé sol-gel) de manière à former des piliers ou structures linéaires essentiellement verticales de faible section, constitués soit uniquement du matériau sensible (8), soit d'au moins un matériau conducteur thermique, soit d'un assemblage de matériaux conducteurs thermiques et diélectriques, soit d'un assemblage de matériaux conducteurs thermiques, diélectriques et sensible (8). Avantageusement, ces matériaux sont enlevés ou ne sont pas déposés sur les structures sensibles à l'éclairement infrarouge (les bolomètres de la matrice d'imagerie).

Dans ce mode de réalisation, typiquement seule la résistance thermique des structures de compensation est diminuée, alors que le bruit basse fréquence n'est pas fondamentalement modifié. En effet, les lignes de courant en fonctionnement ne sont pas ou peu modifiées.

On conçoit qu'avec le dispositif conforme à l'invention, on peut très avantageusement mettre en oeuvre la configuration dite « soustractive » du LETI, en obtenant une insensibilité optique des structures de compensation, tout en réduisant significativement leur bruit électrique ou leur surface. Ce dispositif peut également être mis en oeuvre dans les configurations en pont, en tant que structure de référence à la température du substrat, peu bruyante ou peu étendue, et insensible à l'éclairement.

**Revendications**

1. Dispositif de détection de rayonnement infrarouge comprenant une matrice à une ou deux dimensions de détecteurs bolométriques élémentaires, connectés électriquement à un circuit de lecture (1), et associée à une structure de compensation destinée à dériver la majeure partie du courant électrique de fond ou de mode commun traversant chacun des détecteurs bolométriques de la matrice, *caractérisé :*

• **en ce que** la structure de compensation est constituée d'une couche simple ou complexe intégrant au moins un matériau bolométrique (8), suspendue au-dessus du circuit de lecture (1), et s'étendant entre deux zones (3, 6, 7) de connexion électrique reliées au circuit de lecture (1);
• et **en ce que** ladite structure comporte en dehors desdites zones (3, 6, 7) des extensions (9) en direction du circuit de lecture (1) et en contact thermique avec le circuit de lecture (1), de sorte que ladite couche intégrant le matériau bolométrique (8) constitutif de la structure de compensation est elle-même en contact thermique avec le substrat constitutif du circuit de lecture (1) en dehors des zones de connexion électrique (3, 6, 7).

2.  Dispositif de détection de rayonnement infrarouge selon la revendication 1, *caractérisé* **en ce que** le matériau bolométrique constitutif de la structure de compensation est identique au matériau bolométrique constitutif du matériau bolométrique assurant la détection active et appartenant à la matrice de détection.

3.  Dispositif de détection de rayonnement infrarouge selon l'une des revendications 1 et 2, *caractérisé* **en ce que** la structure de compensation est située en bout de ligne ou en bout de colonne de la matrice de détecteurs élémentaires.

4.  Dispositif de détection de rayonnement infrarouge selon l'une des revendications 1 à 3, *caractérisé* **en ce que** les contacts (9) entre la couche intégrant le matériau bolométrique constitutif des structures de compensation et le substrat (1) du circuit de lecture présentent une configuration linéaire définie par des ondulations de ladite couche dans un plan vertical, les ondulations s'étendant parallèlement aux zones (3, 6) de connexion électrique desdites structure sur le circuit de lecture (1), toute ou partie des extrémités inférieures des ondulations venant en contact thermique (9) avec le substrat (1) constitutif du circuit de lecture.

5.  Dispositif de détection de rayonnement infrarouge selon l'une des revendications 1 à 3, *caractérisé* **en ce que** les contacts (9) entre la couche intégrant le matériau bolométrique constitutif des structures de compensation et le substrat (1) du circuit de lecture présentent une configuration linéaire définie par des ondulations dudit matériau bolométrique dans un plan vertical, lesdites ondulations s'étendant perpendiculairement par rapport aux zones (3, 6, 7) de connexion électrique desdites structures sur le circuit de lecture (1), toute ou partie des extrémités inférieures des ondulations venant en contact thermique (9) avec le substrat (1) constitutif du circuit de lecture.

6.  Dispositif de détection de rayonnement infrarouge selon l'une des revendications 1 à 3, *caractérisé* **en ce que** les contacts (9) entre la couche intégrant le matériau bolométrique constitutif des structures de compensation et le substrat (1) du circuit de lecture présentent une configuration ponctuelle définie par des piliers ou puits au niveau inférieur desquels, ladite couche est en contact avec le substrat (1).

7.  Dispositif de détection de rayonnement infrarouge selon l'une des revendications 4 à 6, *caractérisé* **en ce que** les zones en creux définies par les ondulations ou les puits au sein de la couche intégrant le matériau bolométrique (8) sont comblées par un matériau bolométrique, par un matériau conducteur thermique, par l'assemblage de matériaux conducteurs thermiques et diélectriques, ou par l'assemblage de matériaux conducteurs thermiques, diélectriques et bolométrique.

**Patentansprüche**

1.  Vorrichtung zur Detektion von Infrarotstrahlung, umfassend eine ein- oder zweidimensionale Matrix aus elektrisch mit einer Leseschaltung (1) verbundenen bolometrischen Elementardetektoren, welche einer Ausgleichsstruktur zugeordnet ist, die dazu bestimmt ist, den größten Teil des elektrischen Grundstroms oder Gleichtaktstroms abzuleiten, der durch die jeweiligen bolometrischen Detektoren der Matrix fließt, **dadurch gekennzeichnet, dass**

• die Ausgleichsstruktur durch eine einfache oder komplexe Schicht mit mindestens einem bolometrischen Material (8) gebildet ist, die über der Leseschaltung (1) hängt und die sich zwischen zwei elektrischen Anschlussbereichen (3, 6, 7) erstreckt, welche mit der Leseschaltung (1) verbunden sind,
• die genannte Struktur außerhalb der genannten Bereiche (3, 6, 7) Verlängerungen (9) in Richtung zur Leseschaltung (1) hin aufweist, die in thermischem Kontakt mit der Leseschaltung (1) stehen, so dass die Schicht mit dem die Ausgleichsstruktur bildenden bolometrischen Material (8) selbst mit dem die Leseschaltung (1) bildenden Substrat außerhalb der elektrischen Anschlussbereiche (3, 6, 7) in thermischem Kontakt steht.

**2.** Vorrichtung zur Detektion von Infrarotstrahlung nach Anspruch 1, **dadurch gekennzeichnet, dass** das die Ausgleichsstruktur bildende bolometrische Material identisch ist mit dem bolometrischen Material, das das Material bildet, das die aktive Detektion sicherstellt und zu der Detektionsmatrix gehört.

**3.** Vorrichtung zur Detektion von Infrarotstrahlung nach einem der Ansprüche 1 und 2, **dadurch gekennzeichnet, dass** die Ausgleichsstruktur sich am Zeilenende oder am Spaltenende in der Matrix aus Elementardetektoren befindet.

**4.** Vorrichtung zur Detektion von Infrarotstrahlung nach einem der Ansprüche 1 bis 3, **dadurch gekennzeichnet, dass** die Kontakte (9) zwischen der Schicht mit dem die Ausgleichsstruktur bildenden bolometrischen Material und dem Substrat (1) der Leseschaltung eine lineare Gestaltung aufweisen, die durch Wellen der Schicht in einer vertikalen Ebene definiert ist, wobei die Wellen sich parallel zu den elektrischen Anschlussbereichen (3, 6) der Strukturen auf der Leseschaltung (1) erstrecken, wobei die unteren Enden der Wellen ganz oder teilweise das die Leseschaltung bildende Substrat (1) thermisch kontaktieren (9).

**5.** Vorrichtung zur Detektion von Infrarotstrahlung nach einem der Ansprüche 1 bis 3, **dadurch gekennzeichnet, dass** die Kontakte (9) zwischen der Schicht mit dem die Ausgleichsstruktur bildende bolometrischen Material und dem Substrat (1) der Leseschaltung eine lineare Gestaltung aufweisen, die durch Wellen des bolometrischen Materials in einer vertikalen Ebene definiert ist, wobei die Wellen sich senkrecht zu den elektrischen Anschlussbereichen (3, 6, 7) der Strukturen auf der Leseschaltung (1) erstrecken, wobei die unteren Enden der Wellen ganz oder teilweise das die Leseschaltung bildende Substrat (1) thermisch kontaktieren (9).

**6.** Vorrichtung zur Detektion von Infrarotstrahlung nach einem der Ansprüche 1 bis 3, **dadurch gekennzeichnet, dass** die Kontakte (9) zwischen der Schicht mit dem die Ausgleichsstruktur bildende bolometrischen Material und dem Substrat (1) der Leseschaltung eine punktförmige Gestaltung aufweisen, die durch Säulen bzw. Schächte definiert ist, in deren unterem Bereich die Schicht das Substrat (1) kontaktiert.

**7.** Vorrichtung zur Detektion von Infrarotstrahlung nach einem der Ansprüche 4 bis 6, **dadurch gekennzeichnet, dass** die durch die Wellen oder die Schächte innerhalb der Schicht mit dem bolometrischen Material (9) definierten vertieften Bereiche mit einem bolometrischen Material, mit einem wärmeleitenden Material, durch Zusammensetzung von wärmeleitenden und dielektrischen Materialien oder durch Zusammensetzung von wärmeleitenden, dielektrischen und bolometrischen Materialien verfüllt werden.

**Claims**

**1.** A device for detecting infrared radiation comprising a one or two-dimensional array of elementary bolometric detectors, that are electrically connected to a readout circuit (1), said array being associated with a compensation structure intended to divert most of the background or common-mode current flowing through each of the bolometric detectors of the array, *characterised:*

    • **in that** the compensation structure consists of a simple or complex layer comprising at least one bolometric material (8), suspended over the readout circuit (1), and extending between two electrical connection areas (3, 6, 7) linked to the readout circuit (1); and
    • **in that** said structure comprises outside said areas (3, 6, 7) extensions (9) extending towards the readout circuit (1) and thermal contact with the readout circuit(1), in order that said layer incorporating the bolometric material (8) that constitutes the compensation structure is itself in thermal contact with the substrate that constitutes the readout circuit (1) outside the electrical connection areas (3, 6, 7).

**2.** A device for detecting infrared radiation as claimed in claim 1, *characterized* **in that** the bolometric material that constitutes the compensation structure is identical to the bolometric material that constitutes the bolometric material that ensures active detection and is part of the detection array.

**3.** A device for detecting infrared radiation as claimed in either claim 1 or 2, *characterised* **in that** the compensation structure is located at the end of a row or the end of a column of the array of elementary detectors.

**4.** A device for detecting infrared radiation as claimed in any of claims 1 to 3, *characterised* **in that** the contacts (9) between the layer that incorporates the bolometric material that constitutes the compensation structure and the substrate (1) of the readout circuit have a linear configuration defined by corrugations of said layer in a vertical plane, the corrugations extending parallel to the electrical connection areas (3, 6) of said structures on the readout circuit (1), all or some of the lower ends of the corrugations being in thermal contact (9) with substrate (1) that constitutes the readout circuit.

5. A device for detecting infrared radiation as claimed in any of claims 1 to 3, *clsaracterised* in that the contacts (9) between the layer that incorporates the bolometric material that constitutes the compensation structure and the substrate (1) of the readout circuit have a linear configuration defined by corrugations of said bolometric material in a vertical plane, said corrugations extending at a right angle to electrical connection areas (3, 6, 7) of said structures on readout circuit (1), all or some of the lower ends of the corrugations being in thermal contact (9) with substrate (1) that constitutes the readout circuit.

6. A device for detecting infrared radiation as claimed in any of claims 1 to 3, ***characterised* in that** the contacts (9) between the layer that incorporates the bolometric material that constitutes the compensation structure and the substrate (1) of the readout circuit have a point-shaped configuration defined by posts or pits at the lower level of which said layer is in contact with the substrate (1).

7. A device for detecting infrared radiation as claimed in any of claims 4 to 6, ***characterised* in that** the depressed areas defined by the corrugations or the pits in the layer that incorporates the bolometric material (8) are topped by a bolometric material, by a thermally conducting material, by an assembly of thermally conducting and dielectric materials or by an assembly of thermally conducting, dielectric and bolometric materials.

## Figure 1

## Figure 2

## Figure 3

m colonnes

| | | | | | | |
|---|---|---|---|---|---|---|
| 1,1 | 1,2 | 1,3 | --------------- | 1,m | |
| 2,1 | 2,2 | 2,3 | --------------- | 2,m | n lignes actives |
| n,1 | n,2 | n,3 | --------------- | n,m | |
| n+1,1 | n+1,2 | n+1,3 | --------------- | n+1,m | |
| n+2,1 | n+2,2 | n+2,3 | --------------- | n+2,m | c lignes de compensation |
| n+c,1 | n+c,2 | n+c,3 | --------------- | n+c,m | |

## Fig. 4

| | | | | | |
|---|---|---|---|---|---|
| 1,1 | 1,2 | 1,3 | -------------- | 1,m | Surface optique active |
| | | | -------------- | | Surface dédiée à la compensation |

## Fig. 5

**Fig. 6**

**Fig. 7**

**Fig. 8**

**Fig. 9**

≈ 15μm

**Fig. 10**

1 à quelques µm

**Fig. 11**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2798994
- US 6583416 B
- US 6188069 B
- FR 2752299 A
- FR 2796148 A

**Littérature non-brevet citée dans la description**

- LETI/LIR's amorphous silicon uncooled microbolometer development. *Infrared Detectors and Focal Plane Arrays V, 14-17/04/98, SPIE ORLANDO, SPIE Proceedings,* vol. 3379
- On-Chip compensation of self-heating effects in microbolometer infrared detector arrays. *Sensors and Actuators A,* 1998, vol. 69, 92-96